# EUROPEAN PATENT APPLICATION

(11) **EP 4 794 231 A1**
(43) Date of publication of application: **19.08.2026**
(21) Application number: 24895638.5
(22) Date of filing: 03.07.2024
(51) Int. Cl.: H04L 1/00

(54) **SERVICE MAPPING METHODS, DEVICE AND STORAGE MEDIUM**

(30) Priority: 30.11.2023 CN 202311634193
(71) Applicant: ZTE Corporation, Shenzhen, Guangdong 518057 (CN)
(72) Inventor: TONG, Lingling, Shenzhen, Guangdong 518057 (CN); ZHANG, Yuanbin, Shenzhen, Guangdong 518057 (CN)
(74) Representative: Aipex B.V.
(86) International application number: PCT/CN2024/103251
(87) International publication number: WO 2025/112535

(57) **Abstract**

Provided are a service mapping method, a device, and a storage medium. The service mapping method applied to a transmitting end includes inserting a padding block into each first signal stream after unavailable slots are deleted, to obtain a corresponding second signal stream; interleaving each second signal stream to obtain a corresponding third signal stream, where a first number of padding blocks in the third signal stream carry frame alignment information, and the first number is an integer greater than or equal to 1; and mapping the third signal stream into a server layer container.

## Description

### TECHNICAL FIELD

The present application relates to the field of communication technologies, and in particular, to a service mapping method, a device, and a storage medium.

### BACKGROUND

With the diversification of Internet Protocol (IP) services, such as the rise of artificial intelligence (AI) and distributed computing power networks, the trend of increasing network traffic is becoming increasingly evident. In general, interfaces adopt fixed rates, such as 100G, 200G, 400G, 800G, and 1.6T The Flex Ethernet (FlexE) protocol proposes a FlexE shim layer for adaptation between a media access control (MAC) layer and a physical coding sublayer (PCS). Through the adaptation layer, a fixed interface can flexibly support application scenarios of multiple rates of client services simultaneously. To meet requirements for higher bandwidth and promote the evolution of the FlexE protocol, FlexE protocols for 800G and 1.6FlexE are proposed. Correspondingly, it is inevitable for an optical transport network (OTN) to carry FlexE sub-group signal streams. The reference points of 800G and 1.6T FlexE shim have largely evolved to 257b. At the same time, changes in the frame structure cause changes in the rate relationship. How to map the 257b code stream of a FlexE sub-rate signal stream to an OTN is a problem to be studied.

### SUMMARY

In view of this, embodiments of the present application provide a service mapping method, a device, and a storage medium, which effectively map the 257b code stream of a FlexE sub-rate signal stream to an OTN.

An embodiment of the present application provides a service mapping method applied to a transmitting end. The method includes the following:

A padding block is inserted into each first signal stream after unavailable slots are deleted, to obtain a corresponding second signal stream.

Each second signal stream is interleaved to obtain a corresponding third signal stream, where a first number of padding blocks in the third signal stream carry frame alignment information, and the first number is an integer greater than or equal to 1.

The third signal stream is mapped into a server layer container.

An embodiment of the present application provides a service mapping method applied to a receiving end. The method includes the following:
A fourth signal stream is demapped from a server layer container.

Frame header positioning processing is performed on a fourth signal frame in the fourth signal stream according to frame alignment information carried in a padding block in the fourth signal stream.

The fourth signal stream after frame alignment is de-interleaved, the padding block is deleted, and a corresponding number of unavailable slots are inserted to obtain a corresponding first signal stream.

An embodiment of the present application provides a communication device. The device includes a memory and at least one processor.

The memory is configured to store at least one program.

When executed by the at least one processor, the at least one program causes the at least one processor to implement the method according to any one of the preceding embodiments.

An embodiment of the present application provides a storage medium. The storage medium stores a computer program that, when executed by a processor, implements the method according to any one of the preceding embodiments.

### BRIEF DESCRIPTION OF DRAWINGS

FIG. 1 is a block diagram illustrating the transmission of a FlexE aware signal stream provided by the related art.
FIG. 2 is a flowchart of a service mapping method according to an embodiment of the present application.
FIG. 3 is a diagram of comparison of a first signal stream before and after deletion of unavailable slots according to an embodiment of the present application.
FIG. 4 is a diagram of slot information indication in a first padding block according to an embodiment of the present application.
FIG. 5 is a diagram of the configuration of a 257b padding code block according to an embodiment of the present application.
FIG. 6 is a diagram of the generation of a third signal frame in a third signal stream according to an embodiment of the present application.
FIG. 7 is a flowchart of another service mapping method according to an embodiment of the present application.
FIG. 8 is a diagram of the configuration of an 800G FlexE sub-group signal stream according to an embodiment of the present application.
FIG. 9 is a diagram of slot information indication of a 257b padding block according to an embodiment of the present application.
FIG. 10 is a diagram of the division of an OPU payload according to an embodiment of the present application.
FIG. 11 is a diagram of the configuration of a 100G FlexE sub-group signal stream according to an embodiment of the present application.
FIG. 12 is a block diagram illustrating the structure of a service mapping apparatus according to an embodiment of the present application.
FIG. 13 is a block diagram illustrating the structure of another service mapping apparatus according to an embodiment of the present application.
FIG. 14 is a diagram illustrating the structure of a communication device according to an embodiment of the present application.

### DETAILED DESCRIPTION

Embodiments of the present application are described below in conjunction with drawings. The present application is described below in conjunction with the drawings of the embodiments. The examples given are only used to explain the present application and are not intended to limit the scope of the present application.

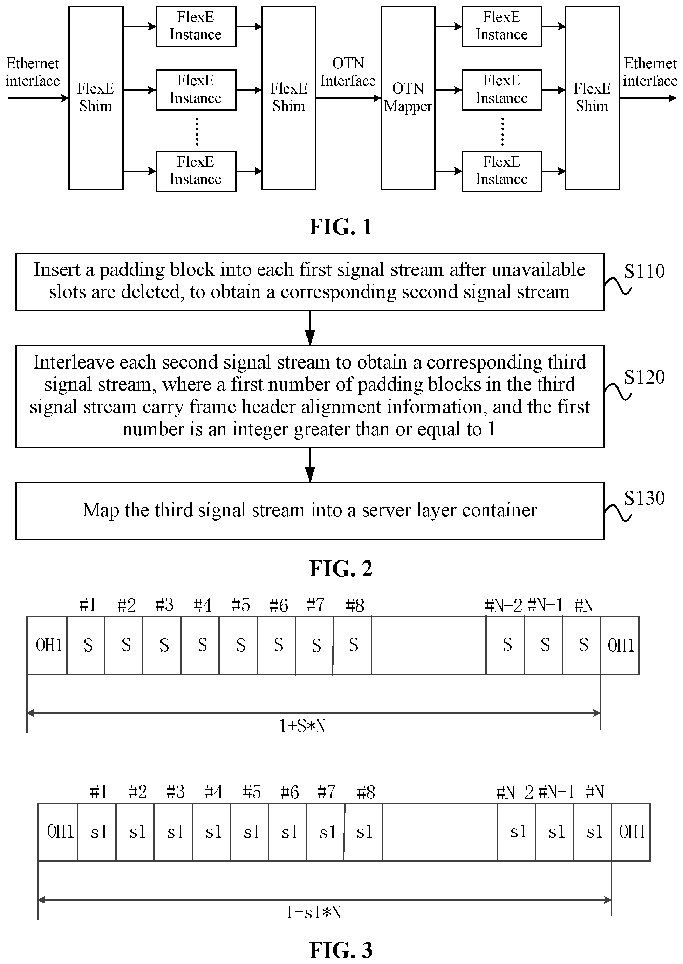

In the FlexE shim technology, certain slots of each instance member in a FlexE group may be marked as unavailable through calendar slot information carried in FlexE overhead, and the unavailable member is not used to carry any FlexE client service. FIG. 1 is a block diagram illustrating the transmission of a FlexE aware signal stream provided by the related art. As shown in FIG. 1, when an OTN device supports the carrying of a FlexE service, a FlexE aware transmission mode may be supported to save bandwidth. That is, the FlexE shim function is supported within the OTN to extract a FlexE instance. Before a FlexE client is mapped to the OTN, unavailable slots, marked as unavailable calendar slots in the FlexE instance, are deleted, and only slots carrying FlexE client after the deletion of unavailable slots are transmitted to a peer end. The slot data of the multiple FlexE instances after the deletion of unavailable slots forms a FlexE sub-group signal stream through interleaving. The FlexE sub-group signal stream is mapped to the OTN, and the unavailable calendar slots are restored when the signal stream is demapped and recovered from the OTN, thereby restoring the original FlexE instance signal stream. These processes are all included in the OTN device.

In an 800G FlexE protocol, each FlexE instance consists of 66B code streams. When a FlexE aware service is mapped to an OTN, 66b has a code self-synchronization mechanism, which can well complete 66b delimitation and thus achieve a FlexE frame alignment function. Compared with a 66b code stream, which can utilize the self-synchronization function of a synchronization header, the 257b code stream requires an additional delimitation mechanism so that an interleaved FlexE sub-rate signal stream can be synchronously mapped to an OTN as a fixed-rate 257b code stream.

In view of this, embodiments of the present application provide a service mapping method. At a transmitting end, frame alignment (FA) information may be inserted into padding information in a third signal stream (for example, a signal frame of a FlexE subgroup partial rate subgroup), and the third signal stream (257b code stream) corresponding to a third signal frame carrying the FA information is mapped to a server layer container (for example, an OTN device). At a receiving end OTN, the 257b code stream of a FlexE sub-group signal stream is demapped. 257b delimitation is performed through the FA, padding information is deleted, and p initial first signal streams (that is, the FlexE instance 257b signal stream) are restored after de-interleaving and the insertion of slots corresponding to the deleted unavailable slots.

In an embodiment, FIG. 2 is a flowchart of a service mapping method according to an embodiment of the present application. This embodiment may be performed by a transmitting end. The transmitting end refers to a source end of an Ethernet interface. As shown in FIG. 2, this embodiment includes S110 to S130.

In S110, a padding block is inserted into each first signal stream after unavailable slots are deleted, to obtain a corresponding second signal stream.

The first signal stream after unavailable slots are deleted refers to a signal stream after the deletion of unavailable slots. The first signal stream after the deletion of unavailable slots includes a signal stream of valid slots and overhead information, that is, a signal stream including payload blocks and overhead blocks. Unavailable slots may be understood as slots that are not available, that is, slots that do not carry payload. The padding block refers to a padding block that needs to be inserted into the first signal stream after the deletion of unavailable slots. In an example, the padding block may be a 257b padding block. The number of paths of the second signal stream is the same as the number of paths of the first signal stream after the deletion of unavailable slots.

After unavailable slots in each initial first signal stream are deleted, the first signal stream after the deletion of unavailable slots is obtained. Then, a padding block is inserted into the first signal stream after the deletion of unavailable slots to obtain the second signal stream of a corresponding path.

In S120, each second signal stream is interleaved to obtain a corresponding third signal stream, where a first number of padding blocks in the third signal stream carry frame alignment information, and the first number is an integer greater than or equal to 1.

Padding blocks, overhead blocks, and payload blocks in each second signal stream are interleaved to obtain a corresponding third signal stream, and a first number of padding blocks in the third signal stream carry frame alignment information. In an example, the frame alignment information may be carried in a first padding block in the third signal stream, or the frame alignment information may be carried in the first number of padding blocks in the third signal stream.

In S130, the third signal stream is mapped into a server layer container.

After the interleaved third signal stream is obtained at the transmitting end, the third signal stream is mapped into the server layer container.

In an embodiment, the service mapping method applied to a transmitting end also includes identifying and extracting unavailable slots in each initial first signal stream, and deleting unavailable slots from the initial first signal stream to obtain a first signal stream after the deletion of unavailable slots. In an example, after at least one initial first signal stream is recovered from a FlexE shim, since the initial first signal stream may carry unavailable slots, the unavailable slots in each initial first signal stream are deleted to obtain the first signal stream after the deletion of unavailable slots. In an example, it is assumed that p (where p is a positive integer greater than or equal to 1) initial first signal streams are recovered from the FlexE shim. Calendar slots in the initial first signal stream are marked as unavailable slots (that is, slots that are not unavailable), and the unavailable slots are deleted to obtain p first signal streams after the deletion of unavailable slots. FIG. 3 is a diagram of comparison of a first signal stream before and after deletion of unavailable slots according to an embodiment of the present application. As shown in FIG. 3, the initial first signal stream is a PCS coding block. The PCS coding block includes an overhead block (OH) 1 and S slots, where the repetition number of S slots between two adjacent overhead blocks is N. After unavailable slots in the initial first signal stream are deleted, the first signal stream after the deletion of unavailable slots is obtained. The first signal stream after the deletion of unavailable slots includes s1 slots, and the repetition number of s1 slots between two adjacent overhead blocks is N. That is, the length of an initial first signal stream is S*N, and the length of the first signal stream after the deletion of unavailable slots is s1*N.

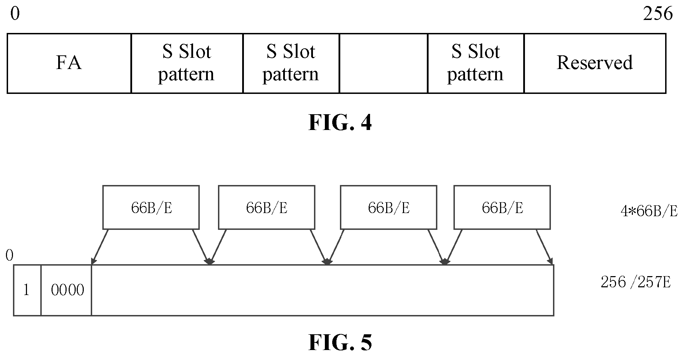

In an embodiment, a first number of padding blocks in the third signal stream also carry a slot pattern. For example, the first padding block in the third signal stream further includes a slot pattern. The slot pattern is used to indicate slot positions corresponding to valid slots and unavailable slots in each initial first signal stream. In the first padding block carrying FA information, a slot pattern is also carried, and the slot pattern indicates the slot positions corresponding to valid slots and unavailable slots in each initial first signal stream. This arrangement allows a receiving end to directly determine the number of valid slots included in the corresponding first signal stream through the slot positions corresponding to valid slots and unavailable slots. FIG. 4 is a diagram of slot information indication in a first padding block according to an embodiment of the present application. As shown in FIG. 4, the first padding block includes FA information and a slot pattern. It is assumed that p initial first signal streams are recovered in total. Then, the first padding block includes p slot patterns, and the slot pattern indicates the slot positions corresponding to valid slots and unavailable slots in each initial first signal stream.

In an embodiment, a first number of padding blocks in the third signal stream also carry the number of valid slots in each initial first signal stream. For example, the first padding block in the third signal stream also includes the number of valid slots in each initial first signal stream. In an example, while FA information and a slot pattern are carried in the first padding block, the number of valid slots in each initial first signal stream may also be carried. Thus, the number of valid slots included in each initial first signal stream can be directly obtained without calculation.

In an embodiment, the number of slot patterns carried in the first padding block is the same as the total number of paths of the second signal stream. The total number of paths of the second signal stream, the number of paths of the initial first signal stream, and the number of paths of the first signal stream after the deletion of unavailable slots are the same. The number of slot patterns carried in the first padding block is equal to the number of signal stream paths included in the third signal stream. That is, one slot pattern may be used to calculate the number of valid slots included in a corresponding initial first signal stream.

In an embodiment, the first signal stream, the second signal stream, and the third signal stream include a first signal frame, a second signal frame, and a third signal frame, respectively, where the first signal frame, the second signal frame, and the third signal frame are each composed of 257b code blocks.

In an embodiment, in the third signal stream, a second number of padding blocks other than the first number of padding blocks are each obtained by performing 256/257B transcoding on four 66B error blocks, where the second number is greater than or equal to 0. For the padding blocks inserted into the first signal stream after the deletion of unavailable slots, two modes exist. One mode is that FA information is carried at the starting position of a first number (for example, the first number is 1) of padding blocks, and the other padding blocks are reserved. The other mode is that a second number of padding blocks other than the first number of padding blocks are each obtained by performing 256/257B transcoding on four 66B error blocks. FIG. 5 is a diagram of the configuration of a 257b padding code block according to an embodiment of the present application. As shown in FIG. 5, the padding block may be a 257b code block. In the second signal stream, multiple 257b code blocks other than the first padding block may be generated by performing 257B transcoding on four 66B/E code blocks.

In an embodiment, a third number of starting bytes in the first number of padding blocks are the frame alignment information, where the third number is an integer greater than or equal to 6.

In an embodiment, the frame alignment information corresponds to 6 bytes, and the frame alignment information includes one of the following: 59, 52, 64, A6, AD, and 9B; or F6, F6, F6, 28, 28, and 28.

In an embodiment, the padding block inserted into the first signal stream is located before a current first signal frame and after a previous first signal frame. The padding information included in the padding block inserted into the first signal stream is continuous and may be located before the frame header of the current first signal frame corresponding to the first signal stream and after the frame tail of the previous first signal frame.

In an embodiment, the padding block inserted into the first signal stream is located after an overhead block and before a payload block of a current first signal frame. The padding block inserted into the first signal stream may also be located after the overhead block of the current first signal frame corresponding to the first signal stream and before the payload block of the current first signal frame.

In an embodiment, the number of padding blocks included in each second signal stream is equal to the number of slots included in the corresponding first signal stream after the deletion of unavailable slots minus one. The number of padding blocks inserted before an overhead block in each first signal stream after the deletion of unavailable slots is equal to the number of slots included in the corresponding first signal stream after the deletion of unavailable slots minus one so that the rate of the interleaved third signal stream is proportional to the total number of slots n, thereby reducing the requirement on the number of bits of a phase locked loop (PLL). For example, after p initial first signal streams are recovered from a FlexE shim and unavailable slots of the p initial first signal streams are deleted, p first signal streams after the deletion of unavailable slots are obtained. The number of valid slots included in each first signal stream after the deletion of unavailable slots is si. Then, (si-1) padding blocks are inserted before an overhead block of the first signal stream after the deletion of unavailable slots to obtain a corresponding second signal stream. In an example, the number of slots included in each initial first signal stream may be different, and the number of valid slots included in each first signal stream after the deletion of unavailable slots may also be different.

In an embodiment, in a case where the number of valid slots in at least one initial first signal stream is equal to the total number of slots included in the initial first signal stream, the number of valid slots in the other initial first signal streams is determined according to a slot step rate and a slot step interval.

In a case where the slot step rate is 25G and the slot step interval is 5G, the number of valid slots in the initial first signal stream includes at least one of the following: configured with 5 as a starting value and 5 as the granularity.

In a case where the slot step rate is 100G and the slot step interval is 25G, the number of valid slots in the initial first signal stream satisfies the following condition: configured with 4 as a starting value and 4 as the granularity. After p initial first signal streams are recovered from a FlexE shim, the number of slots S of the first q (0 ≤ q ≤ p) initial first signal streams among the p initial first signal streams is a full slot. That is, the number of valid slots of the q initial first signal streams is also S, that is, all slots are valid slots. Then, the number of valid slots in the other (p-q) initial first signal streams may be determined according to the slot step rate and the slot step interval. For example, in a case where the slot step rate is 25G and the slot step interval is 5G, the number of valid slots in the initial first signal stream may be one or more of 5, 10, and 15. In a case where the slot step rate is 100G and the slot step interval is 25G, the number of valid slots in the initial first signal stream may be one or more of 4, 8, 12, 16, 20, and 24.

In an embodiment, interleaving each second signal stream to obtain a corresponding third signal stream includes the following:

Padding blocks in all paths of the second signal streams are interleaved in sequence according to an order to obtain interleaved padding blocks.

Overhead blocks in all paths of the second signal streams are interleaved in sequence according to an order to obtain interleaved overhead blocks.

Payloads in all paths of the second signal streams are interleaved in sequence according to an order to obtain interleaved payload blocks.

The corresponding third signal stream is formed from the interleaved padding blocks, the interleaved overhead blocks, and the interleaved payload blocks.

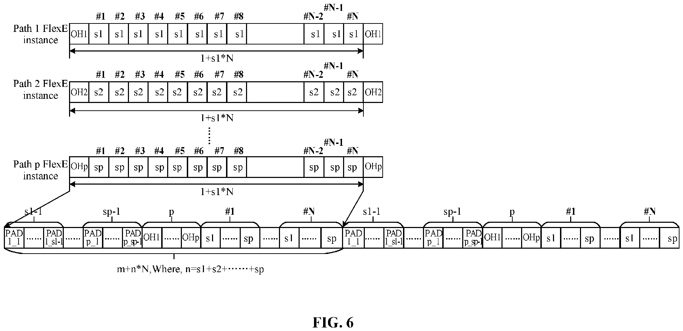

FIG. 6 is a diagram of the generation of a third signal frame in a third signal stream according to an embodiment of the present application. It is assumed that the numbers of valid slots included in the first signal streams after the deletion of unavailable slots corresponding to p initial first signal streams recovered from a FlexE shim are s1, s2, ..., sp, respectively. Then, (s1-1) padding blocks (that is, PAD1_1, PAD1_2, ..., PAD1_s1-1) are inserted into the first signal stream after the deletion of unavailable slots of path 1, (s2-1) padding blocks (that is, PAD2_1, PAD2_2, ..., PAD2_s2-1) are inserted into the first signal stream after the deletion of unavailable slots of path 2, ..., and (sp-1) padding blocks (that is, PADp_1, PADp_2, ..., PADp_sp-1) are inserted into the first signal stream after the deletion of unavailable slots of path p. Then, the (si-1) padding blocks are interleaved in the order from path 1 to path p, overheads (that is, OH1, OH2, ..., OHp) of p paths are interleaved in the order from 1 to p, and valid slots of length si of p paths are also interleaved in the order from 1 to p. Interleaved padding blocks, overhead blocks, and payload blocks are obtained and combined to obtain the corresponding third signal frame (which may also be referred to as a FlexE sub-group signal stream). The total number of slots included in the third signal frame is that n = s1 + s2 + ... + sp, and the length of the third signal frame is n + n*N.

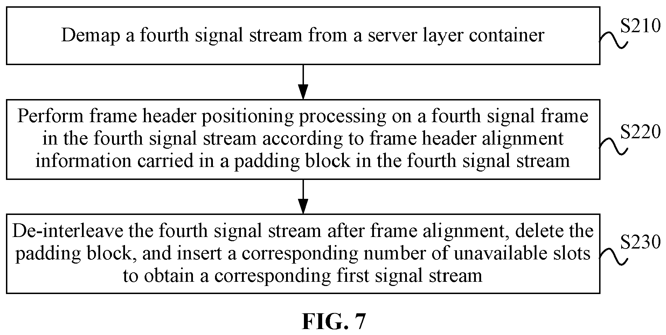

In an embodiment, FIG. 7 is a flowchart of a service mapping method according to an embodiment of the present application. This embodiment may be performed by a receiving end. As shown in FIG. 7, this embodiment includes S210 to S230.

In S210, a fourth signal stream is demapped from a server layer container.

In an example, the fourth signal stream is the same as the third signal stream. That is, in the process in which the transmitting end sends the third signal stream to the receiving end, no noise signal or other signals are added to the third signal stream. The fourth signal stream received by the receiving end is the same as the third signal stream.

In S220, frame header positioning processing is performed on a fourth signal frame in the fourth signal stream according to frame alignment information carried in a padding block in the fourth signal stream.

In the embodiment, frame alignment may be performed on the fourth signal frame by searching for the frame alignment information in the padding block in the fourth signal stream, and then, the frame header position of the fourth signal frame is determined based on the frame alignment information in the padding block.

In S230, the fourth signal stream after frame alignment is de-interleaved, the padding block is deleted, and a corresponding number of unavailable slots are inserted to obtain a corresponding first signal stream.

After the frame header position of the fourth signal frame is obtained, the fourth signal stream is sequentially de-interleaved, the padding block is deleted, and a corresponding number of unavailable slots are inserted so that the corresponding first signal stream can be obtained.

The number of unavailable slots inserted at the receiving end is the same as the number of unavailable slots deleted at the transmitting end.

In an embodiment, performing frame header positioning processing on the fourth signal frame in the fourth signal stream according to the frame alignment information in the padding block in the fourth signal stream includes the following:

Frame alignment processing is performed on the fourth signal frame by searching for the frame alignment information in the padding block in the fourth signal frame, where the process of the frame alignment processing includes an out of frame state and a in frame state.

In the out of frame state, in a case where the frame alignment information in the padding block is found, and in response to the frame alignment information in the padding block being found at an expected position in a fourth number of consecutive frames, the in frame state is entered, where the fourth number is an integer greater than or equal to 3.

In the in frame state, in response to the frame alignment information in the padding block being not found at an expected position in a fifth number of consecutive frames, the out of frame state is entered, where the fifth number is an integer greater than or equal to 3.

The frame header position of the fourth signal frame is determined based on the frame alignment information in the padding block, where the frame header position of the fourth signal frame is spaced from the padding block carrying the frame alignment information by a sixth number of 257b code blocks. The header position of the fourth signal frame is spaced from the padding block carrying the header alignment information in the previous fourth signal frame by a sixth number of 257b code blocks.

In an embodiment, the expected position is determined by the frame length of the fourth signal frame in the fourth signal stream, and the number of 257b code blocks included in the fourth signal frame is determined by the total number of valid slots included in the fourth signal frame and the slot repetition count in the fourth signal frame. The expected position is used to characterize the frame header position in the fourth signal frame. The total number of valid slots included in the fourth signal frame is the product of the number of valid slots included in each path of the fourth signal stream and the total number of paths of the fourth signal stream. The number of 257b code blocks included in the fourth signal frame is the product of the total number of valid slots included in the fourth signal frame and the slot repetition count in the fourth signal frame plus one.

In an embodiment, the number of valid slots is obtained from a slot pattern carried in a padding block. The number of valid slots included in each signal stream may be obtained according to the slot positions of valid slots and unavailable slots indicated by the slot pattern carried in the first padding block.

In an embodiment, the number of valid slots is obtained according to configuration information. The configuration information is obtained through negotiation between an access device and an OTN device. The configuration information may be obtained through negotiation between the access device and the OTN device, and the number of valid slots is obtained through the configuration information.

In an embodiment, inserting corresponding unavailable slots into a signal stream after the de-interleaving and deletion of padding blocks to obtain an initial first signal stream includes inserting corresponding unavailable slots at a frame tail of the first signal stream after the deletion of unavailable slots to obtain the initial first signal stream. In an example, in a case where the number of valid slots is carried in the first padding block, unavailable slots may be directly inserted at the frame tail of the first signal stream after the deletion of unavailable slots to obtain the corresponding initial first signal stream.

In an embodiment, inserting corresponding unavailable slots into a signal stream after the de-interleaving and deletion of padding blocks to obtain an initial first signal stream includes inserting unavailable slots at corresponding slot positions in the first signal stream after the deletion of unavailable slots according to a slot pattern to obtain the initial first signal stream. In an example, in the initial first signal stream recovered from a FlexE shim at the transmitting end, data information carried in unavailable slots is 66B error code blocks. Correspondingly, after the first signal stream after the deletion of unavailable slots is recovered from the fourth signal stream at the receiving end, padding blocks are inserted at corresponding unavailable slot positions in the first signal stream after the deletion of unavailable slots to obtain the initial first signal stream. In an example, in a case where a slot pattern is carried in the first padding block, the slot positions of unavailable slots may be determined according to the slot pattern, and then, padding blocks are inserted at the corresponding unavailable slot positions in the first signal stream after the deletion of unavailable slots to obtain the initial first signal stream.

It is to be noted that explanations of parameters such as the padding block, first signal stream after deletion of unavailable slots, initial first signal stream, second signal stream, third signal stream, and valid slot in the service mapping method applied to a receiving end may be found in the descriptions of corresponding parameters in the embodiments of the service mapping method applied to a transmitting end described above, and will not be repeated here.

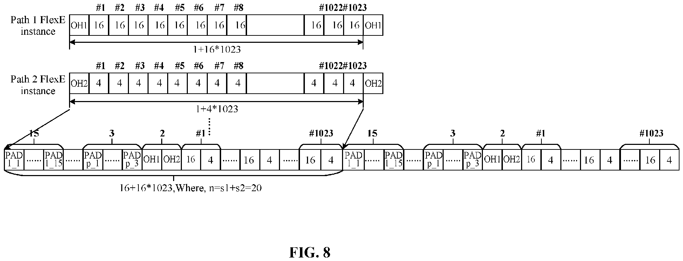

In a first embodiment, a group of 800G FlexE instances carrying unavailable slots is mapped into an optical channel data unit flex (ODUflex) through a FlexE aware mode. Each FlexE instance is divided into S (S = 16) slots. Two initial first signal streams (for example, FlexE instance signal streams) are recovered in total. The numbers of valid slots included in each FlexE instance signal stream are s1 = 16 and s2 = 4, respectively. The step rate of a single slot is 50G. The total number of available slots is n = s1 + s2 = 20. The rate of the ODUflex (FlexE aware) is 800GE rate*240/238*S/16. Each 800G FlexE instance consists of (1+16*1023) 257b blocks. FIG. 8 is a diagram of the configuration of an 800G FlexE sub-group signal stream according to an embodiment of the present application.

Step 1: The frame format of the two recovered 800G FlexE instances is a 1+16*1023 257b code stream. Before unavailable slots are deleted, the rate of the FlexE instance signal stream (that is, the initial first signal stream) is 800*257/256*(16k-1)/16k (where 800G refers to the MAC rate, 257/256 refers to the rate after 257/256 transcoding, and (16k-1)/16k refers to the rate after the deletion of unavailable slots and alignment). Unavailable slots are deleted according to indication information in a calendar slot to obtain the first signal stream after the deletion of unavailable slots. After padding blocks (for example, 257b padding blocks) are added to each first signal stream after the deletion of unavailable slots, p second signal streams are obtained. The p second signal streams are interleaved to obtain a third signal stream (which may also be referred to as a FlexE sub-group signal stream), as shown in FIG. 8. The client service rate after the deletion of unavailable slots and interleaving is 800*257/256*(16k-1)/16k*n*1204/(1+16*1023).

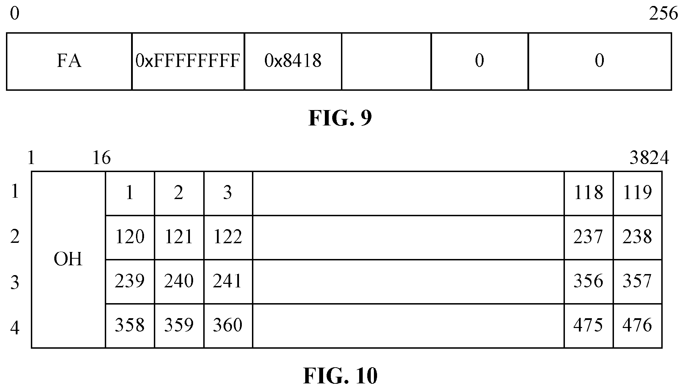

Step 2: The FA value included in the 257b padding block may refer to the 6-byte value of an Ethernet alignment marker, as described in Table 1. FIG. 9 is a diagram of slot information indication of a 257b padding block according to an embodiment of the present application. As shown in FIG. 9, the first padding block includes FA information and related information of a slot pattern.

**Table 1 Configuration Table of FA Value**

| | | | | | |
|---|---|---|---|---|---|
| 59 | 52 | 64 | A6 | AD | 9B |

Step 3: The server layer service rate of the OPUflex (with a size of 476*256) (800G FlexE aware) is determined as 800*257/256*240/239*n/16, and the rate ratio between the user service rate and the server layer service rate is determined as follows:
$R = \frac{1 + N}{1 + S \times N} \times \frac{16 k - 1}{16 k} \times \frac{239}{240} \times S = \frac{1024}{1 + 16 \times 1023} \times \frac{16383}{{2}^{14}} \times \frac{239}{240} \times 16 .$

That is, $R = \frac{43 \times 127 \times 239}{\left(1+16*1023\right) * 80} .$

Step 4: The ODUflex is divided according to m (m = 256) bits. FIG. 10 is a diagram of the division of an OPU payload according to an embodiment of the present application. As shown in FIG. 10, a total of 3824 bytes are included, and then, 3824 - 16 = 3808 bytes. The bytes are divided according to 256 bits to obtain 476 blocks. According to the rate ratio R and the size of the OPUflex (that is, 476 blocks per frame, and each block includes 256 bits), the number $r = \frac{4341 \times 119}{16369 \times 20} = 1 + \frac{189199}{16369 * 20}$ of padding is determined according to $R = \frac{476 - r}{476}$, where the denominator is 327380 and the numerator is 189199. Padding positions are allocated and padding encoding is performed through a bit synchronous generic mapping procedure (BGMP) mode. A deterministic 20-bit sigma-delta algorithm is used to determine which OPU frames contain 2 padding blocks, that is, the mapped Cm(t) value is 474, and Cm(t) in the remaining OPU frames is 475. The specific number of frames j is determined as follows:
$Cm \left(t\right) = 474 j \times 189199 mod 327380 < 189199 .$
$Cm \left(t\right) = 475 j \times 96099 mod 327380 < 189199 .$

Step 5: At an OTN demapping end, it is determined whether a second stuff exists in the next frame through justification control (JC) indication in the OPU overhead, and the signal stream of the third signal stream (FlexE sub-group signal stream) (for example, a 257b code stream) is obtained after deletion of the stuff. The two instances correspond to s1 (s1 = 16) and s2 (s2 = 4) slots, respectively, and the number of inserted padding blocks is s1 + s2 - 2 = 18. Based on this, the FlexE frame length is obtained as n*(N + 1) = 20*1024, where n = s1 + s2. The FA information carried in the starting 257b of the FlexE sub-group signal stream is matched, the next 257b carrying FA is found after multiple intervals of 20*1024 257b, and after continuous confirmation for 3 times, the FA frame alignment process is completed, and the starting positions of 257b and the FlexE sub-group signal stream are determined.

Step 6: A slot pattern and/or the number of valid slots is extracted from the 257b padding block carrying FA information.

Step 7: The inserted 257b padding information in the FlexE sub-group signal stream is deleted. 2 FlexE instance 257b code streams after the deletion of unavailable slots are recovered after corresponding de-interleaving according to the interleaving order at the source end. According to the slot pattern and/or the number of valid slots, 257b block information of unavailable slots is restored at corresponding positions, and 257b /E padding is used to restore the original FlexE instance signal stream (that is, the initial first signal stream in the preceding embodiment).

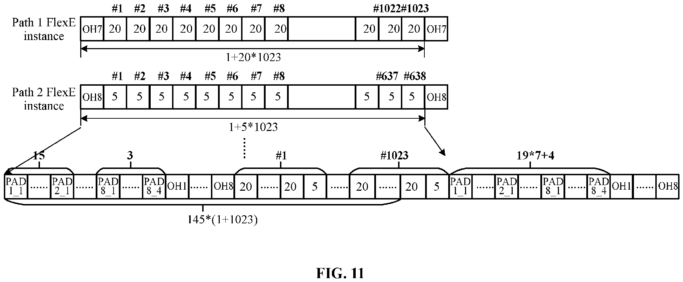

In a second embodiment, a group of 100G FlexE instances carrying unavailable slots is mapped into an ODUflex through a FlexE aware mode. Each FlexE instance is divided into 20 slots. A total of p (p = 8) initial first signal streams (FlexE instance signal streams) are recovered. The numbers of available slots of each path are s1 = 20, s2 = 20, ..., s6 = 20, s7 = 20, s8 = 5, respectively. The total number of valid slots is n = s1 + s2 + ... + s7 + s8 = 145. The rate of the ODUflex (FlexE aware) is 100GE rate*240/238*n/20. Each 100G FlexE instance consists of (1+20*1023) 257b blocks, that is, N = 1023 in FIG. 3. The PCS coding is a 256/257b code block, and the number of S slots is 20. FIG. 11 is a diagram of the configuration of a 100G FlexE sub-group signal stream according to an embodiment of the present application.

Step 1: The signal frame length of the recovered 8 100G FlexE instances is a 1+20*1023 257b code stream. Before unavailable slots are deleted, the rate of the FlexE instance signal stream (that is, the initial first signal stream) is 100*257/256*(16k-1)/16k (where 100G refers to the MAC rate, 257/256 refers to the rate after 257/256 transcoding, and (16k-1)/16k refers to the rate after the deletion of unavailable slots and alignment). Unavailable slots are deleted according to indication in a calendar slot to obtain the first signal stream after the deletion of unavailable slots. After padding blocks (for example, 257b padding blocks) are inserted to each first signal stream after the deletion of unavailable slots, p second signal streams are obtained. The p second signal streams are interleaved to obtain a third signal stream (which may also be referred to as a FlexE sub-group signal stream), as shown in FIG. 11. The user service rate after the deletion of unavailable slots and interleaving is 100*257/256*(16k-1)/16k*n*1204/(1+20*1023).

Step 2: The FA information included in the 257b padding block may refer to the 6 bytes of the OTN, as described in Table 2.

**Table 2 Configuration Table of FA Value**

| | | | | | |
|---|---|---|---|---|---|
| F6 | F6 | F6 | 28 | 28 | 28 |

Step 3: The server layer service rate of the OPUflex (with a size of 476*256) (800G FlexE aware) is determined as 100*257/256*240/239*n/20, and the rate ratio between the user service rate and the server layer service rate is determined as follows:
$R = \frac{N + 1}{1 + S \times N} \times \frac{16 k - 1}{16 k} \times \frac{239}{240} \times S = \frac{1024}{1 + 20 \times 1023} \times \frac{16383}{{2}^{14}} \times \frac{239}{240} \times 20 .$

That is, $R = \frac{43 \times 127 \times 239}{\left(1+20*1023\right) * {2}^{6}} .$

Step 4: The ODUflex is divided according to m (m = 256) bits, which is the same as that shown in FIG. 10 of the preceding embodiment. According to the rate ratio R and 476 blocks per frame with each block including 256 bits, the number $r = 476 \times \left(1-\frac{43 \times 127 \times 239}{7 \times 37 \times 79 \times 64}\right) = 1 + \frac{3 \times 9 \times 991}{37 \times 79 \times 16}$ of padding is determined according to $R = \frac{476 - r}{476}$, where the denominator is 46768, and the numerator is 26757. Padding positions are allocated and padding encoding is performed by using a generic BGMP mapping mode. A deterministic 16-bit sigma-delta algorithm is used to determine which OPU frames contain 2 padding blocks, that is, the mapped Cm(t) value is 474, and Cm(t) in the remaining OPU frames is 475. The specific number of frames j is determined by the following sigma-delta formula:
$Cm \left(t\right) = 474 j \times 26757 mod 46768 < 26757 .$$Cm \left(t\right) = 475 j \times 26757 mod 46768 > 26757 .$

Step 5: At an OTN demapping end, it is determined whether a second stuff exists in the next frame through JC indication in the OPU overhead, and the fourth signal stream (for example, a 257b code stream) corresponding to the fourth signal frame (FlexE sub-group signal frame) is obtained after deletion of the stuff. According to the configured numbers of valid slots, that is, 20, 20, ..., 5 in the 8 instances, a total of 145 slots, and 137 inserted 257b padding blocks, the FlexE frame length that n*(N+1) = 145*1024 is obtained, where n = s1 + s2+ ... + s7 + s8 = 145. Similarly, by matching the FA information carried in the FlexE 257b padding blocks and based on the frame length of the FlexE sub-group signal stream, the starting positions of 257b blocks and the FlexE sub-group signal stream can be obtained after continuous confirmation for 3 times.

Step 7: The 257b padding information in the FlexE sub-group signal stream is deleted. De-interleaving is performed on the stream according to the same interleaving order as the source end (that is, the transmitting end) to recover 8 FlexE 257b code streams after the deletion of unavailable slots. According to the information about configured valid slots, unavailable slots are inserted at the corresponding 257b block positions in the FlexE instance signal stream after the deletion of unavailable slots. The unavailable slots carry 257b/E code blocks to restore a complete FlexE instance signal stream (that is, the initial first signal stream in the preceding embodiment).

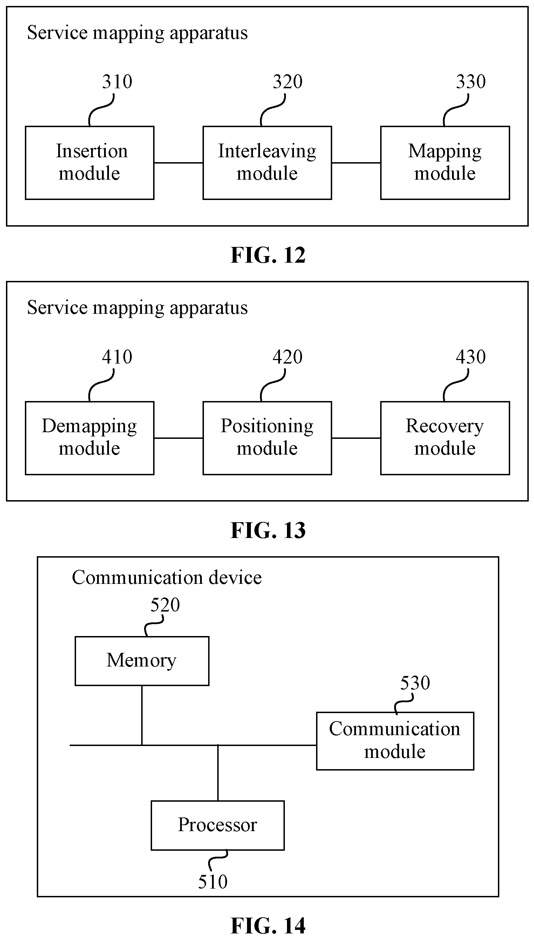

In an embodiment, FIG. 12 is a block diagram illustrating the structure of a service mapping apparatus according to an embodiment of the present application. This embodiment is applied to a transmitting end. As shown in FIG. 12, the service mapping apparatus in this embodiment includes an insertion module 310, an interleaving module 320, and a mapping module 330.

The insertion module 310 is configured to insert a padding block into each first signal stream after unavailable slots are deleted, to obtain a corresponding second signal stream.

The interleaving module 320 is configured to interleave each second signal stream to obtain a corresponding third signal stream, where a first number of padding blocks in the third signal stream carry frame alignment information, and the first number is an integer greater than or equal to 1.

The mapping module 330 is configured to map the third signal stream into a server layer container.

In an embodiment, the first signal stream, the second signal stream, and the third signal stream include a first signal frame, a second signal frame, and a third signal frame, respectively, where the first signal frame, the second signal frame, and the third signal frame are each composed of 257b code blocks.

In an embodiment, in the third signal stream, a second number of padding blocks other than the first number of padding blocks are each obtained by performing 256/257B transcoding on four 66B error blocks, where the second number is greater than or equal to 0.

In an embodiment, a third number of starting bytes in the first number of padding blocks are the frame alignment information, where the third number is an integer greater than or equal to 6.

In an embodiment, the frame alignment information corresponds to 6 bytes, and the frame alignment information includes one of the following: 59, 52, 64, A6, AD, and 9B; or F6, F6, F6, 28, 28, and 28.

In an embodiment, the padding block inserted into the first signal stream is located before a current first signal frame and after a previous first signal frame.

In an embodiment, the padding block inserted into the first signal stream is located after an overhead block and before a payload block of a current first signal frame.

The service mapping apparatus provided in this embodiment is configured to implement the service mapping method applied to a transmitting end in the embodiment shown in FIG. 2. The service mapping apparatus provided in this embodiment has similar implementation principles and technical effects, which are not repeated here.

In an embodiment, FIG. 13 is a block diagram illustrating the structure of another service mapping apparatus according to an embodiment of the present application. This embodiment is applied to a receiving end. As shown in FIG. 13, the service mapping apparatus in this embodiment includes a demapping module 410, a positioning module 420, and a recovery module 430.

The demapping module 410 is configured to demap a fourth signal stream from a server layer container.

The positioning module 420 is configured to perform frame header positioning processing on a fourth signal frame in the fourth signal stream according to frame alignment information carried in a padding block in the fourth signal stream.

The recovery module 430 is configured to de-interleave the fourth signal stream after frame alignment, delete the padding block, and insert a corresponding number of unavailable slots to obtain a corresponding first signal stream.

In an embodiment, the positioning module 420 includes a frame alignment unit and a determination unit.

The frame alignment unit is configured to perform frame alignment processing on the fourth signal frame by searching for the frame alignment information in the padding block in the fourth signal frame, where the process of the frame alignment processing includes an out of frame state and a in frame state.

In the out of frame state, in a case where the frame alignment information in the padding block is found, and in response to the frame alignment information in the padding block being found at an expected position in a fourth number of consecutive frames, the in frame state is entered, where the fourth number is an integer greater than or equal to 3.

In the in frame state, in response to the frame alignment information in the padding block being not found at an expected position in a fifth number of consecutive frames, the out of frame state is entered, where the fifth number is an integer greater than or equal to 3.

The determination unit is configured to determine the frame header position of the fourth signal frame based on the frame alignment information in the padding block, where the frame header position of the fourth signal frame is spaced from the padding block carrying the frame alignment information by a sixth number of 257b code blocks.

In an embodiment, the expected position is determined by the frame length of the fourth signal frame in the fourth signal stream, and the number of 257B code blocks included in the fourth signal frame is determined by the total number of valid slots included in the fourth signal frame and the slot repetition count in the fourth signal frame.

The service mapping apparatus provided in this embodiment is configured to implement the service mapping method applied to a receiving end in the embodiment shown in FIG. 7. The service mapping apparatus provided in this embodiment has similar implementation principles and technical effects, which are not repeated here.

In an embodiment, FIG. 14 is a diagram illustrating the structure of a communication device according to an embodiment of the present application. As shown in FIG. 14, the device provided in the present application includes a processor 510, a memory 520, and a communication module 530. One or more processors 510 may be included in the device. One processor 510 is shown as an example in FIG. 14. One or more memories 520 may be provided in the device. One memory 520 is shown as an example in FIG. 14. The processor 510, the memory 520, and the communication module 530 in the device may be connected via a bus or in other manners. FIG. 14 shows the connection via a bus as an example. In this embodiment, the device may be used as a transmitting end.

As a computer-readable storage medium, the memory 520 may be configured to store software programs, computer-executable programs, and modules, such as program instructions/modules (for example, the insertion module 310, the interleaving module 320, and the mapping module 330 in the service mapping apparatus) corresponding to the device in any embodiment of the present application. The memory 520 may include a program storage region and a data storage region. The program storage region may store an operating system and an application program required by at least one function. The data storage region may store data created according to the use of the device. Moreover, the memory 520 may include a high-speed random-access memory and may also include a non-volatile memory such as at least one magnetic disk memory, a flash memory, or another non-volatile solid-state memory. In some examples, the memory 520 may also include memories located remotely relative to the processor 510, and these remote memories may be connected to the device via a network. Examples of the preceding network include but are not limited to, the Internet, an intranet, a local area network, a mobile communication network, and a combination thereof.

In a case where the communication device is used as a transmitting end, the preceding device may be configured to execute the service mapping method applied to a transmitting end in any one of the preceding embodiments and has corresponding functions and effects.

In a case where the communication device is used as a receiving end, the preceding device may be configured to execute the service mapping method applied to a receiving end in any one of the preceding embodiments and has corresponding functions and effects.

Embodiments of the present application also provide a storage medium including computer-executable instructions. The computer-executable instructions are used to perform a service mapping method applied to a transmitting end when executed by a computer processor. The method includes inserting a padding block into each first signal stream after unavailable slots are deleted, to obtain a corresponding second signal stream; interleaving each second signal stream to obtain a corresponding third signal stream, where a first number of padding blocks in the third signal stream carry frame alignment information, and the first number is an integer greater than or equal to 1; and mapping the third signal stream into a server layer container.

Embodiments of the present application also provide a storage medium including computer-executable instructions. The computer-executable instructions are used to perform a service mapping method applied to a receiving end when executed by a computer processor. The method includes demapping a fourth signal stream from a server layer container; performing frame header positioning processing on a fourth signal frame in the fourth signal stream according to frame alignment information carried in a padding block in the fourth signal stream; and de-interleaving the fourth signal stream after frame alignment, deleting the padding block, and inserting a corresponding number of unavailable slots, to obtain a corresponding first signal stream.

It is to be understood by those skilled in the art that the term "user equipment" covers any suitable type of wireless user equipment, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). The computer-readable medium may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The above are only optional embodiments of the present application and are not intended to limit the present application, and for those skilled in the art, the present application may have various modifications and variations. Any modifications, equivalent substitutions, improvements, and the like made within the spirit and principle of the present application should fall within the scope of the present application.

## Claims

1. A service mapping method, applied to a transmitting end and comprising:
inserting a padding block into each first signal stream after unavailable slots are deleted, to obtain a corresponding second signal stream;
interleaving each second signal stream to obtain a corresponding third signal stream, wherein a first number of padding blocks in the third signal stream carry frame alignment information, and the first number is an integer greater than or equal to 1; and
mapping the third signal stream into a server layer container.

2. The service mapping method of claim 1, wherein the first signal stream, the second signal stream, and the third signal stream comprise a first signal frame, a second signal frame, and a third signal frame, respectively, wherein the first signal frame, the second signal frame, and the third signal frame are each composed of 257b code blocks.

3. The service mapping method of claim 1, wherein in the third signal stream, a second number of padding blocks other than the first number of padding blocks are each obtained by performing 256/257B transcoding on four 66B error blocks, wherein the second number is greater than or equal to 0.

4. The service mapping method of claim 1, wherein a third number of starting bytes in the first number of padding blocks are the frame alignment information, wherein the third number is an integer greater than or equal to 6.

5. The service mapping method of claim 4, wherein the frame alignment information corresponds to 6 bytes, and the frame alignment information comprises one of the following: 59, 52, 64, A6, AD, and 9B; or F6, F6, F6, 28, 28, and 28.

6. The service mapping method of claim 1, wherein the padding block inserted into the first signal stream is located before a current first signal frame and after a previous first signal frame.

7. The service mapping method of claim 1, wherein the padding block inserted into the first signal stream is located after an overhead block and before a payload block of a current first signal frame.

8. A service mapping method, applied to a receiving end and comprising:
demapping a fourth signal stream from a server layer container;
performing frame header positioning processing on a fourth signal frame in the fourth signal stream according to frame alignment information carried in a padding block in the fourth signal stream; and
de-interleaving the fourth signal stream after frame alignment, deleting the padding block, and
inserting a corresponding number of unavailable slots, to obtain a corresponding first signal stream.

9. The service mapping method of claim 8, wherein performing frame alignment processing on the fourth signal frame in the fourth signal stream according to the frame alignment information in the padding block in the fourth signal stream comprises:
performing frame alignment processing on the fourth signal frame by searching for the frame alignment information in the padding block in the fourth signal frame, wherein a process of the frame alignment processing comprises an out of fame state and a in frame state;
in the out of frame state, in a case where the frame alignment information in the padding block is found, and in response to the frame alignment information in the padding block being found at an expected position in a fourth number of consecutive frames, entering the in frame state, wherein the fourth number is an integer greater than or equal to 3;
in the in frame state, in response to the frame alignment information in the padding block being not found at an expected position in a fifth number of consecutive frames, entering the out of frame state, wherein the fifth number is an integer greater than or equal to 3; and
Processing the frame alignment of the fourth signal frame based on the frame alignment information in the padding block, wherein the frame header position of the fourth signal frame is spaced from the padding block carrying the frame alignment information by a sixth number of 257b code blocks.

10. The service mapping method of claim 9, wherein the expected position is determined by a frame length of the fourth signal frame in the fourth signal stream, and a number of 257b code blocks comprised in the fourth signal frame is determined by a total number of valid slots comprised in the fourth signal frame and a slot repetition count in the fourth signal frame.

11. A communication device, comprising: a memory and at least one processor; wherein
the memory is configured to store at least one program; and
when executed by the at least one processor, the at least one program causes the at least one processor to implement the method of any one of claims 1 to 7 or claims 8 to 10.

12. A storage medium storing a computer program that, when executed by a processor, performs the method of any one of claims 1 to 7 or 8 to 10.
